# EUROPEAN PATENT SPECIFICATION

(11) **EP 2 445 189 B1**
(45) Date of publication and mention of the grant of the patent: **08.08.2018**
(21) Application number: 11004633.1
(22) Date of filing: 07.06.2011
(51) Int. Cl.: H04N 1/387, G06K 9/00

(54) **Information processing apparatus and method thereof**
Vorrichtung und Verfahren zur Informationsverarbeitung
Appareil de traitement d'informations et son procédé

(30) Priority: 25.10.2010 KR 20100104263
(43) Date of publication of application: 25.04.2012
(73) Proprietor: LG Electronics Inc., Yeongdeungpo-gu Seoul, 07336 (KR)
(72) Inventor: Kim, Jonghwan, Bupyeong-Gu Incheon (KR)
(74) Representative: Ter Meer Steinmeister & Partner

(56) References cited:
- EP-A1- 2 120 212
- EP-A1- 2 157 777
- US-A1- 2007 002 016
- US-A1- 2008 204 317
- US-A1- 2009 171 568

## Description

### BACKGROUND OF THE INVENTION

### 1. Field of the Invention

The present invention relates to an information processing apparatus of a mobile terminal and a method thereof.

### 2. Background of the Invention

In general, an information processing apparatus of a mobile terminal in the related art captures an image or video, and displays the captured image or video on the display unit.

EP 2 157 777 A1 discloses a mobile terminal and a geotagging method. When a camera function of the mobile terminal is selected, a camera and a location information module are driven, and an indicator indicating whether or not location information has been acquired by the location information module is displayed. When an image capturing command is input, the captured image is geotagged according to whether or not the location information has been acquired.

US 2009/0171568 A1 discloses a device capable of providing geotagged photographic augmented GPS navigation. A geotagged photographic image is included on the display upon the determination of the proximity of a waypoint associated with a navigational route. That is, the geotagged photographic image is included on the display to assist the user to accurately identify the change in direction associated with the waypoint.

### SUMMARY OF THE INVENTION

An information processing apparatus of a mobile terminal according to the embodiments of the present disclosure may include a camera configured to capture an image; a display unit configured to display the captured image; an information module configured to generate augmented reality information including geo-tagging information of the captured image, capturing direction information thereof, and direction information of the mobile terminal when capturing the image; a controller configured to tag the augmented reality information to the captured image; and a storage unit configured to store the captured image and the augmented reality information tagged to the captured image as a content.

The controller displays the stored image or the video on the display unit, and displays a key or icon for displaying the augmented reality information and/or augmented reality control menu on the displayed image or the video.

As an example associated with the present invention, the content may further include a video captured through the camera, and the augmented reality information may be tagged to the video. As an example associated with the present invention, the controller may generate a message indicating that the captured image or video is being recorded together with the augmented reality information, and may display the generated message on the display unit.

As an example associated with the present invention, the controller may generate a message indicating that the captured image or the video has been stored together with the augmented reality information when the augmented reality information has been tagged to the captured image or the video, and may display the generated message on the display unit.

As an example associated with the present invention, the augmented reality information may further include at least any one of building information within the image or video, weather information corresponding to a capture location of the image or video, cinema information associated with the image or video, book information associated with the image or video, and music information associated with the image or video.

As an example associated with the present invention, the augmented reality control menu may include at least any one of a detailed information display icon for displaying detailed information for a building within the image or the video, a phone call icon for making a phone call based on a phone number included in the detailed information, an Internet search icon for implementing an Internet search based on the detailed information, a location view icon for displaying the capture location of the image or video, a path guide icon for guiding a path from a current location to a capture location of the image or video, a picture search icon for searching a picture related to the image or video, and a street view icon for guiding a street within the image or video.

As an example associated with the present invention, the controller may extract only a content displayed with a key or icon for displaying the augmented reality information among a plurality of contents stored in the storage unit, and may display the extracted content on the display unit.

As an example associated with the present invention, controller may implement a specific application stored in the storage unit according to a direction of the mobile terminal.

An information processing method of a mobile terminal according to the embodiments of the present disclosure may include displaying an image captured through a camera on a display unit; generating augmented reality information including geo-tagging information of the captured image, capturing direction information thereof, and posture information of the mobile terminal when capturing the image; tagging the augmented reality information to the captured image; and storing the captured image and the augmented reality information tagged to the captured image as a content in a storage unit.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram illustrating the configuration of a mobile communication terminal to which an information processing apparatus according to the embodiments of the present disclosure is applied;
FIG. 2 is a block diagram illustrating an information processing apparatus of a mobile terminal according to a first embodiment of the present disclosure;
FIG. 3 is a flow chart illustrating an information processing method of a mobile terminal according to a first embodiment of the present disclosure;
FIG. 4 is an exemplary view illustrating a captured image (AR image) displayed on the display unit according to a first embodiment of the present disclosure;
FIG. 5 is an exemplary view illustrating a method of notifying that augmented reality information is being recorded according to a first embodiment of the present disclosure;
FIG. 6 is an exemplary view illustrating a method of notifying that augmented reality information has been stored according to a first embodiment of the present disclosure;
FIG. 7 is a flow chart illustrating an information processing method of a mobile terminal according to a second embodiment of the present disclosure;
FIG. 8 is an exemplary view illustrating a content displayed on the display unit according to a second embodiment of the present disclosure;
FIG. 9 is another exemplary view illustrating a content displayed on the display unit according to a second embodiment of the present disclosure;
FIG. 10 is an exemplary view illustrating the AR information and/or AR control menu displayed on the content according to a second embodiment of the present disclosure;
FIG. 11 is a flow chart illustrating an information processing method of a mobile terminal according to a third embodiment of the present disclosure;
FIG. 12 is an exemplary view illustrating a content displayed on the display unit according to a third embodiment of the present disclosure;
FIG. 13 is another exemplary view illustrating a content displayed on the display unit according to a third embodiment of the present disclosure;
FIG. 14 is an exemplary view illustrating augmented reality information displayed on the display unit according to a third embodiment of the present disclosure;
FIG. 15 is a flow chart illustrating an information processing method of a mobile terminal according to a fourth embodiment of the present disclosure;
FIG. 16 is an exemplary view illustrating a plurality of contents displayed on the display unit according to a fourth embodiment of the present disclosure; and
FIG. 17 is an exemplary view illustrating a content displayed on the display unit according to a fourth embodiment of the present disclosure.

### DETAILED DESCRIPTION OF THE INVENTION

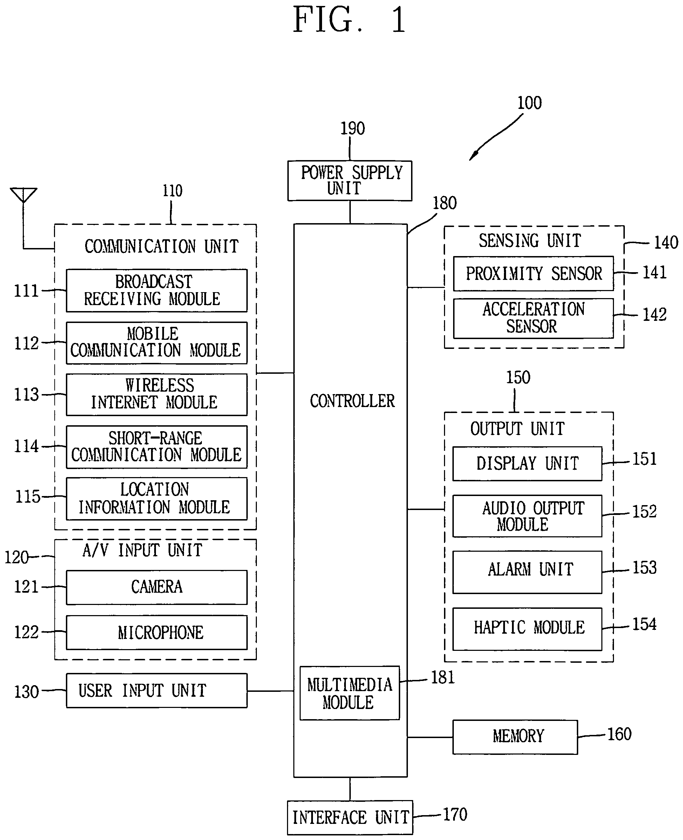

Hereinafter, an information processing apparatus and method of a mobile terminal in which augmented reality information is tagged to a content such as an image and/or video, thereby allowing the user to check augmented reality information while easily and conveniently viewing the content will be described with reference to FIGS. 1 through 17.

FIG. 1 is a block diagram illustrating the configuration of a mobile communication terminal 100 to which an information processing apparatus according to the embodiments of the present invention is applied. The mobile communication terminal (mobile phone) 100 may be implemented in various forms. For example, the mobile communication terminal 100 may include a portable phone, a smart phone, a notebook computer, a digital broadcast receiver, a personal digital assistant (PDA), a portable multimedia player (PMP), and the like.

As illustrated in FIG. 1, the mobile communication terminal 100 may include a wireless communication unit 110, an A/V (Audio/Video) input unit 120, a user input unit 130, a sensing unit 140, an output unit 150, a memory 160, an interface unit 170, a controller 180, a power supply unit 190, and the like. All the elements of the mobile communication terminal 100, as illustrated in FIG. 1, are not necessarily required, and therefore, the mobile communication terminal 100 may be implemented with greater or less elements than the elements as illustrated in FIG. 1.

The wireless communication unit 110 typically includes one or more elements allowing radio communication between the mobile communication terminal 100 and a wireless communication system, or allowing radio communication between radio communication the mobile communication terminal 100 and a network in which the mobile communication terminal 100 is located. For example, the wireless communication unit 110 may include a broadcast receiving module 111, a mobile communication module 112, a wireless Internet module 113, a short-range communication module 114, a location information module 115, and the like.

The broadcast receiving module 111 receives broadcast signals and/or broadcast associated information from an external broadcast management server through a broadcast channel. The broadcast channel may include a satellite channel and/or a terrestrial channel. The broadcast management server may mean a server that generates and transmits a broadcast signal and/or broadcast associated information or a server that receives a previously generated broadcast signal and/or broadcast associated information and transmits to the mobile communication terminal 100. The broadcast associated information may mean information regarding a broadcast channel, a broadcast program, a broadcast service provider, and the like. The broadcast signal may include a TV broadcast signal, a radio broadcast signal and a data broadcast signal as well as a broadcast signal in a form that a data broadcast signal is combined with the TV or radio broadcast signal.

On the other hand, the broadcast associated information may also be provided through a mobile communication network, and in this case, the broadcast associated information may be received by the mobile communication module 112. The broadcast signal may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may receive a broadcast signal using various types of broadcast systems. In particular, the broadcast receiving module 111 may receive a digital broadcast signal using a digital broadcast system such as digital multimedia broadcasting-terrestrial (DMB-T), digital multimedia broadcasting-satellite (DMB-S), media forward link only (MediaFLO), digital video broadcast-handheld (DVB-H), integrated services digital broadcast-terrestrial (ISDB-T), and the like. The broadcast receiving module 111 is, of course, configured to be suitable for every broadcast system that provides a broadcast signal as well as the above-mentioned digital broadcast systems. The broadcast signal and/or broadcast-associated information received through the broadcast receiving module 111 may be stored in the memory 160.

The mobile communication module 112 transmits and/or receives a radio signal to and/or from at least one of a base station, an external terminal and a server over a mobile communication network. Here, the radio signal may include a voice call signal, a video call signal and/or various types of data according to text and/or multimedia message transmission and/or reception.

The wireless Internet module 113 means a module for supporting wireless Internet access. The wireless Internet module 113 may be built-in or externally installed to the mobile communication terminal 100. Here, it may be used a wireless Internet access technique including a WLAN (Wireless LAN), Wi-Fi, WiBro (Wireless Broadband), WiMax (World Interoperability for Microwave Access), HSDPA (High Speed Downlink Packet Access), and the like.

The short-range communication module 114 means a module for supporting a short-range communication. Here, it may be used a short-range communication technology including Bluetooth, Radio Frequency Identification (RFID), Infrared Data Association (IrDA), Ultra Wideband (UWB), ZigBee, and the like.

The location information module 115 is a module for checking or acquiring a location of the mobile terminal. A GPS module is an example. The GPS module receives location information from a plurality of satellites. Here, the location information may include coordinate information represented by latitude and longitude values. For example, the GPS module may measure an accurate time and distance from three or more satellites, and accurately calculate a current location according to trigonometry based upon three different distances. A method of acquiring distance and time information from three satellites and performing error correction with a single satellite may be used. In particular, the GPS module may acquire an accurate time together with three-dimensional speed information as well as the location of the latitude, longitude and altitude values from the location information received from the satellites. For the location information module 115, a Wi-Fi positioning system and/or a hybrid positioning system may be applicable thereto.

The location information module 115 may further include a magnetic field sensor and/or a gravity sensor for detecting a direction. For example, the location information module 115 detects a direction (for example, east, west, south, and north) of the mobile communication terminal to implement navigation using augmented reality through the magnetic field sensor (electronic compass). The location information module 115 detects in which direction gravity works through the gravity sensor (G sensor), and shows a vertical screen when the user holds a mobile communication terminal in a vertical direction and shows a wide screen by rotating the screen by 90 degrees when holding it in a horizontal direction. Furthermore, when the user views a video, the location information module 115 rotates the screen according to a direction that the user holds a mobile communication terminal through the gravity sensor (G sensor), thereby allowing the user to conveniently view a picture.

The A/V (audio/video) input unit 120 receives an audio or video signal, and the A/V (audio/video) input unit 120 may include a camera 121 and a microphone 122. The camera 121 processes an image frame, such as still picture or video, obtained by an image sensor in a video phone call or image capturing mode. The processed image frame may be displayed on a display unit 151.

The image frames processed by the camera 121 may be stored in the memory 160 (or other storage medium) or transmitted through the wireless communication unit 110. Two or more cameras 121 may be provided according to the configuration type and/or use environment of the mobile terminal.

The microphone 122 receives an external audio signal through a microphone in a phone call mode, a recording mode, a voice recognition mode, and the like, and processes the audio signal into electrical voice data. The processed voice data may be converted and outputted into a format capable of being transmitted to a mobile communication base station through the mobile communication module 112 in the phone call mode. The microphone 122 may implement various types of noise canceling algorithms to cancel noise generated in a procedure of receiving the external audio signal. The user input unit 130 may generate input data to control an operation of the mobile terminal. The user input unit 130 may be configured by including a keypad, a dome switch, a touch pad (pressure/capacitance), a jog wheel, a jog switch, and the like. Particularly, when the touch pad forms an interlayer structure together with a display unit 151, it may be called a touch screen.

The sensing unit 140 detects a current status of the mobile communication terminal 100 such as an opened or closed state of the mobile communication terminal 100, a location of the mobile communication terminal 100, the presence or absence of user contact, an orientation of the mobile communication terminal 100, an acceleration or deceleration movement of the mobile communication terminal 100, and the like, and generates a sensing signal for controlling the operation of the mobile communication terminal 100. For example, when the mobile communication terminal 100 is a slide phone type, it may sense an opened or closed state of the slide phone. Furthermore, the sensing unit 140 takes charge of a sensing function associated with whether or not power is supplied from the power supply unit 190, whether or not an external device is coupled with the interface unit 170.

The interface unit 170 performs a role of interfacing with all external devices connected to the mobile communication terminal 100. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like. Here, the identification module may be configured as a chip for storing various information required to authenticate an authority for using the mobile communication terminal 100, which may include a User Identity Module (UIM), a Subscriber Identity Module (SIM), a Universal Subscriber Identity Module (USIM), and the like. Also, the device provided with the identification module (hereinafter, referred to as 'identification device') may be implemented in the type of a smart card. Hence, the identification device can be coupled to the mobile communication terminal 100 via a port. The interface unit 170 may receive data or power from an external device and transfer the received data or power to each constituent element in the mobile communication terminal 100, or transmit data within the mobile communication terminal 100 to the external device.

The output unit 150 is configured to provide an output for audio signal, video signal, or alarm signal, and the output unit 150 may include the display unit 151, an audio output module 152, an alarm unit 153, and the like.

The display unit 151 may display or output information processed in the mobile communication terminal 100. For example, when the mobile communication terminal 100 is in a phone call mode, the display unit 151 may display a User Interface (UI) or a Graphic User Interface (GUI) associated with a call. When the mobile communication terminal 100 is in a video call mode or image capturing mode, the display unit 151 may display a captured image and/or received image, a UI or GUI.

The display unit 151 may include at least one of a Liquid Crystal Display (LCD), a Thin Film Transistor-LCD (TFT-LCD), an Organic Light Emitting Diode (OLED) display, a flexible display, and a three-dimensional (3D) display. Furthermore, there may exist two or more display units 151 according to an embodiment. For example, an external display unit (not shown) and an internal display unit (not shown) are simultaneously provided in the mobile communication terminal 100.

Meanwhile, when the display unit 151 and a sensor for detecting a touch operation (hereinafter, 'touch sensor') are formed with an interlayer structure (hereinafter, 'touch screen'), the display unit 151 may be also used as an input device in addition to an output device. The touch sensor may be configured in a form of, for example, touch film, touch sheet, touch pad, or the like.

Furthermore, the touch sensor may be configured to convert a change such as pressure applied to a specific area of the display unit 151 or capacitance generated on a specific area of the display unit 151 into an electrical input signal. The touch sensor may be configured to detect a touch input pressure as well as a touch input position and a touch input area. When there is a touch input to the touch sensor, a signal (or signals) corresponding to the touch input is sent to a touch controller (not shown). The touch controller processes the signal (or signals) and then sends the corresponding data to a controller 180. By this, the controller 180 may know whether or not any region is touched on the display unit 151.

In the present invention, a proximity-touch means a state that a pointer approaches to a screen while being apart a predetermined distance from the screen without actually touching the screen.

The proximity sensor 141 may be arranged in an inner region of the mobile terminal 100 surrounded by a touch screen or may be arranged adjacent to the touch screen. The proximity sensor 141 is a sensor for detecting the presence or absence of an object approaching to a certain detection surface or an object that exists nearby by using the force of electromagnetism or infrared rays without a mechanical contact. Thus, the proximity sensor 141 has a considerably longer life span compared with a contact type sensor, and it can be utilized for various purposes.

Examples of the proximity sensor 141 may include a transmission type photo sensor, a direct reflection type photo sensor, a mirror-reflection type photo sensor, an RF oscillation type proximity sensor, a capacitance type proximity sensor, a magnetic proximity sensor, an infrared proximity sensor, and the like. When the touch screen is an electrostatic type, the approach of a pointer can be detected based on a change in a field according to the approach of the pointer. In this case, the touch screen (touch sensor) may be classified as a proximity sensor.

In the following description, for the sake of brevity, recognition of the pointer positioned to be close to the touch screen, although the pointer is not actually brought into contact with the touch screen, will be called a "proximity touch", while recognition of actual contacting of the pointer on the touch screen will be called a "contact touch". The position where the pointer is proximately touched on the touch screen means a position where the pointer is positioned to correspond vertically to the touch screen when the pointer is proximately touched.

Furthermore, the proximity sensor 141 can detect a proximity touch, and a proximity touch pattern (for example, a proximity touch distance, a proximity touch direction, a proximity touch speed, a proximity touch time, a proximity touch position, a proximity touch movement state, or the like). Information corresponding to the detected proximity touch operation and the proximity touch pattern can be outputted to the touch screen.

The sensing unit 140 may include an acceleration sensor 142. The acceleration sensor 142 is a device for transforming an acceleration change in any one direction into an electrical signal, which is widely used with the development of micro-electromechanical systems (MEMS) technology. There are various kinds of acceleration sensors 142 from the one that is built in an airbag system of a vehicle to measure a large value of acceleration used to detect collision, to the one that measures a small value of acceleration used as an input means to recognize the detailed operation of a human hand. The acceleration sensor 142 is typically configured by providing two or three axes in a package, and according to the used circumstances there may be a case where only one z-axis is required. Accordingly, when the x-axis or y-axis acceleration sensor is used instead of the z-axis acceleration sensor due to any reason, the acceleration sensor may be provided to be placed upright on a main substrate using a separate piece of substrate.

The audio output module 152 may output audio data received from the wireless communication unit 110 or stored in the memory 160 in a call signal reception mode, a call mode, a record mode, a voice recognition mode, a broadcast reception mode, and the like. Also, the audio output module 152 may output an audio signal associated with the function performed by the mobile terminal 100 (for example, a call signal reception sound, a message reception sound, etc.). The audio output module 152 may include a receiver, a speaker, a buzzer, and the like.

The alarm unit 153 may output a signal to notify the occurrence of an event of the mobile terminal 100. Examples of the event occurred in the mobile terminal 100 may include call signal reception, message reception, a key signal input, a touch input, and the like. In addition to an audio or video output, the alarm unit 153 may output a signal in a different manner to notify the occurrence of an event. For example, the alarm unit 153 may output in a form of vibration. When a call signal or message is received, the alarm unit 153 may vibrate the mobile terminal 100 through vibration means. When a key signal is inputted, the alarm unit 153 may vibrate the mobile terminal 100 through vibration means using a feedback to the key signal input. The user can recognize an occurrence of the through vibration as described above. The signal for notifying an occurrence of the event may be outputted through the display unit 151 or the audio output module 152.

The haptic module 154 generates various tactile effects felt by the user. A typical example of the tactile effects generated by the haptic module 154 is vibration. Intensity, pattern, or the like, generated by the haptic module 154 can be controlled. For example, different vibrations may be combined and outputted or sequentially outputted.

The haptic module 154, in addition to vibration, may generate various tactile effects, including an effect by stimulation such as a pin arrangement vertically moving against the contacted skin surface, an ejection or suction force of air through the ejection or suction port, a brush against the skin surface, a contact of the electrode, electrostatic force, or the like, or an effect by reproduction of thermal sense using a heat absorption or generation device.

The haptic module 154 may be implemented to feel a tactile effect through muscular senses by a finger or arm of the user as well as to transfer a tactile effect through direct contact. There may exist two or more haptic modules 154 according to an embodiment. The haptic module 154 may be provided at a place frequently being contacted by the user in a vehicle. For example, it may be provided on a steering wheel, a gearshift lever, a seat, or the like.

The memory 160 may store software programs for processing and controlling the controller 180, or may temporarily store data (for example, phonebook, message, still image, video, and the like) that are inputted and/or outputted.

The memory 160 may include at least one type of storage medium including a Flash memory type, a hard disk type, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only Memory (PROM), a magnetic memory, a magnetic disk, an optical disk, and the like. Also, the mobile communication terminal 100 may run a web storage that performs the storage function of the memory 160 over the Internet, or operate in association with the web storage.

The interface unit 170 serves as an interface to every external device that may be connected with the mobile terminal 100. For example, the interface unit 170 may include a wired or wireless headset port, an external battery charger port, a wired or wireless data port, a memory card port, a ports for connecting a device having an identification module, an audio input/output (I/O) port, a video input/output (I/O) port, an earphone port, and the like. Here, the identification module, as a chip that stores various information for authenticating the authority to use the mobile terminal 100, may include a user identity module (UIM), a subscriber identity module (SIM), a universal subscriber identity module (USIM), and the like. In addition, the device having the identification module (hereinafter, 'identifying device') may be made in a form of smart card. Accordingly, the identifying device may be connected with the mobile terminal 100 through a port. The interface unit 170 is provided to receive data or power from an external device and transfer the received data or power to every element within the mobile terminal 100 or may be used to transfer data within the mobile terminal to an external device.

When the mobile terminal 100 is connected with an external cradle, the interface unit 170 may serve as a conduit to allow power from the cradle to be supplied therethrough to the mobile terminal 100 or may serve as a conduit to allow various command signals inputted from the cradle to be transferred to the mobile terminal 100 therethrough. Various command signals or the power inputted from the cradle may operate as a signal for recognizing when the mobile terminal is properly mounted on the cradle.

The controller 180 typically controls a general operation of the mobile terminal 100. For example, the controller 180 performs a control and processing operation associated with a voice call, a data communication, a video phone call, and the like. In addition, the controller 180 may include a multimedia module 181 for reproducing multimedia content. The multimedia module 181 may be provided within the controller 180 or may be separately provided from the controller 180.

The controller 180 may perform a pattern recognition processing to recognize a handwriting or picture-drawing input performed on the touch screen as a character or image, respectively.

The power supply unit 190 receives external or internal power to supply the power required for an operation of each element under a control of the controller 180.

The function of an element applied to the mobile terminal 100 may be implemented in a computer-readable medium using software, hardware, or any combination thereof. For hardware implementation, it may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented in the controller 180. For software implementation, the embodiments such as procedures or functions may be implemented together with separate software modules that allow performing of at least one function or operation. Software codes can be implemented by a software application written in any suitable programming language. Furthermore, the software codes may be stored in the memory 160 and executed by the controller 180.

The voice recognition module 182 recognizes a voice uttered by a user, and performs a relevant function based on the recognized voice signal.

A navigation session 300 applied to the mobile communication terminal 100 displays a travel path on data map.

On the other hand, an information processing apparatus applied to a mobile terminal 100 according to the embodiments of the present disclosure may include a camera configured to capture an image; a display unit configured to display the captured image; an information module configured to generate augmented reality information including geo-tagging information of the captured image, capturing direction information thereof, and posture information of the mobile terminal when capturing the image; a controller configured to tag the augmented reality information to the captured image; and a storage unit configured to store the captured image and the augmented reality information tagged to the captured image as a content.

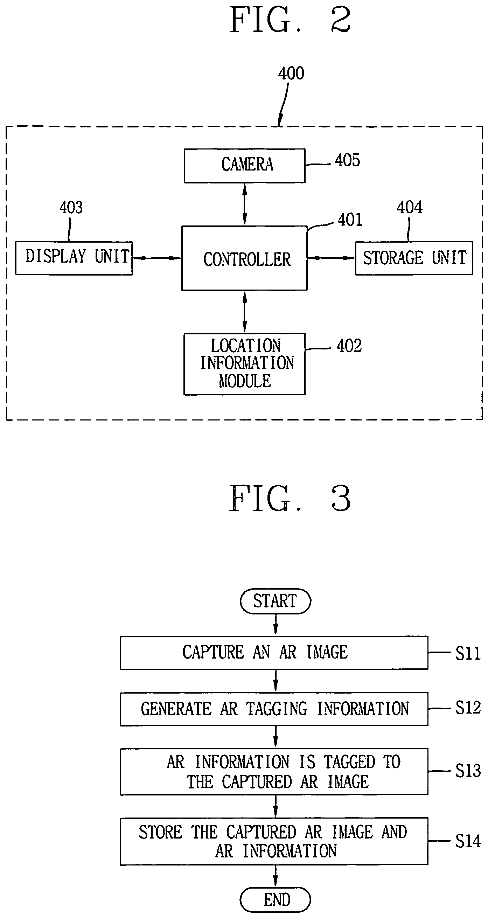

The detailed description for the constituent elements of an information processing apparatus applied to a mobile terminal 100 according to the embodiments of the present disclosure will be described with reference to FIGS. 2 through 17.

Hereinafter, an information processing apparatus and method of a mobile terminal according to a first embodiment of the present disclosure will be described with reference to FIGS. 2 through 6. The information processing apparatus and method of a mobile terminal according to the embodiments of the present disclosure may be applicable to a mobile terminal such as mobile communication terminal 100, the telematics terminal 200, and a navigation apparatus, as well as applicable to a terminal such as a smart phone, a notebook computer, a personal digital assistant (PDA), a portable multimedia player (PMP), a television, a video player, and the like.

FIG. 2 is a block diagram illustrating an information processing apparatus of a mobile terminal according to a first embodiment of the present disclosure.

As illustrated in FIG. 2, an information processing apparatus of a mobile terminal according to a first embodiment of the present disclosure may include a camera 405 configured to capture an image (picture); a display unit 403 configured to display the captured image; an information module 402 configured to generate augmented reality (AR) information including geo-tagging information of the captured image, capturing direction information of the camera 405, and direction (posture) information of the mobile terminal when capturing the image; a controller 401 configured to tag (combining or overlapping) the augmented reality (AR) information to the captured image; and a storage unit 404 configured to store the captured image and the augmented reality information tagged to the captured image.

The location information module 402 may include a global position system (GPS) module, and a magnetic field sensor and/or a gravity sensor for detecting a direction. For example, the location information module 402 detects a capture location of the image through the GPS sensor. The location information module 402 detects the direction information (for example, east, west, south, and north) of the mobile communication terminal for augmented reality through the magnetic field sensor (electronic compass). The location information module 402 detects in which direction gravity works through the gravity sensor (G sensor), thereby detecting the direction information (for example, sky direction, front direction, earth direction) of the mobile terminal.

The controller 401 may receive point-of-interest information corresponding to each object (facility, building, etc.) included in an actual picture (captured image or captured video) from a server through a communication network, and may display the received point-of-interest information on the actual picture.

FIG. 3 is a flow chart illustrating an information processing method of a mobile terminal according to a first embodiment of the present disclosure.

First, the camera 405 captures an object (image) according to the user's request, and outputs the captured image (AR image) to the controller 401 (S11).

The controller 401 displays the captured image (AR image) on the display unit 403.

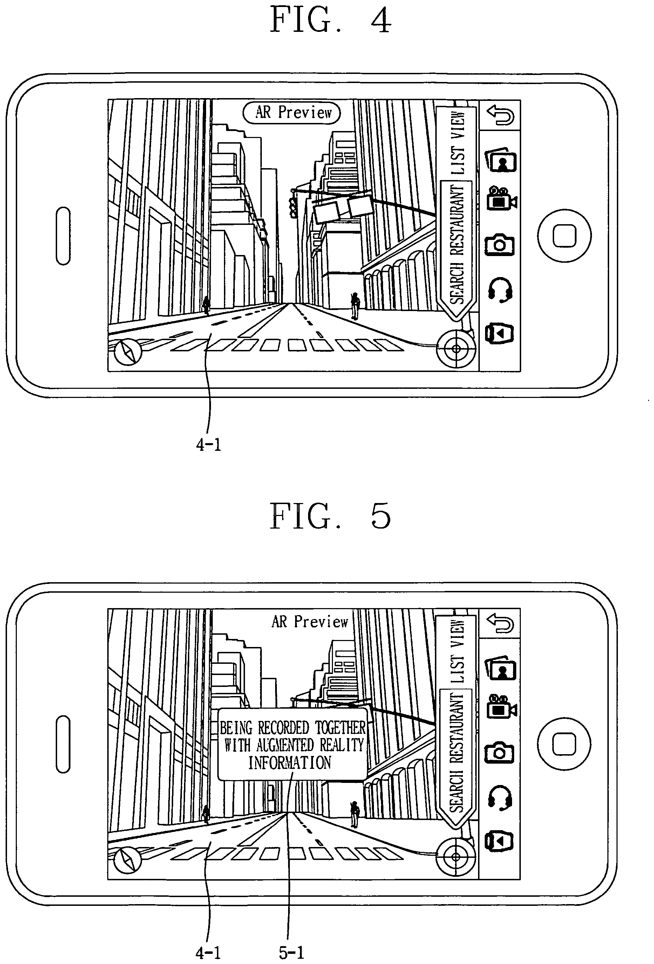

FIG. 4 is an exemplary view illustrating a captured image (AR image) displayed on the display unit according to a first embodiment of the present disclosure.

As illustrated in FIG. 4, the controller 401 displays the captured image (AR image) 4-1 on the display unit 403.

The location information module 402 generates augmented reality (AR) information including geo-tagging information, capturing direction information, and the like when the image is captured by the camera 405 (S12). The augmented reality (AR) information is combined (overlapped) with the captured AR image to implement augmented reality. The method of implementing the augmented reality itself is also disclosed in U.S. Laid-Open Patent No. (USP 2006/0241792), and the detailed description thereof will be omitted.

The controller 401 tags the augmented reality information to the captured image (AR image) (S13), and stores the captured image and the augmented reality information tagged to the captured image in the storage unit 404 (S14).

FIG. 5 is an exemplary view illustrating a method of notifying that augmented reality information is being recorded according to a first embodiment of the present disclosure.

As illustrated in FIG. 5, the controller 401 generates a message 5-1 indicating that the captured image 4-1 is being recorded together with the augmented reality information when tagging the augmented reality information to the captured image 4-1 while at the same time recording the captured image (AR image) 4-1, and displays the generated message 5-1 on the display unit 403.

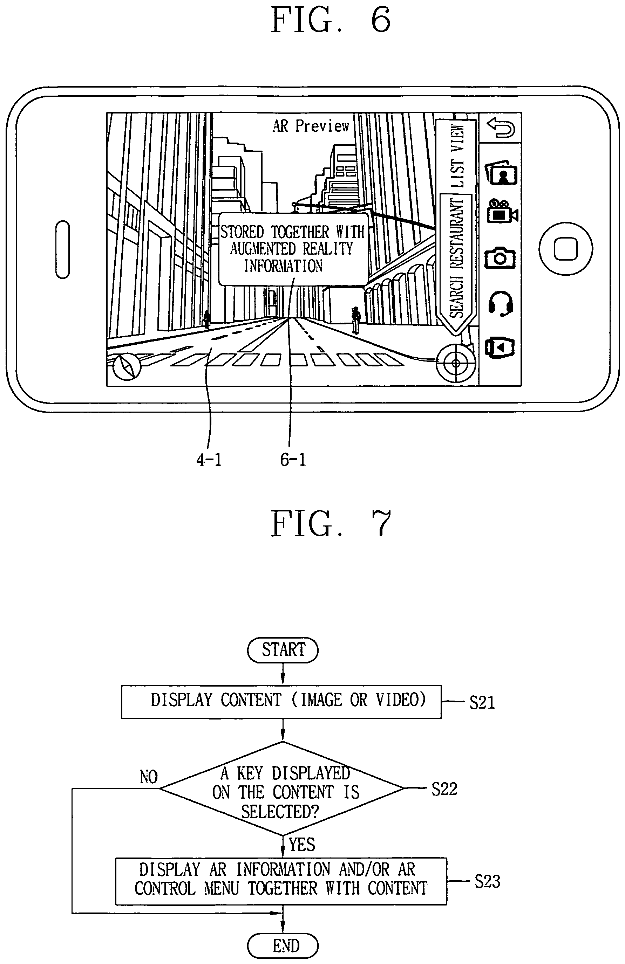

FIG. 6 is an exemplary view illustrating a method of notifying that augmented reality information has been stored according to a first embodiment of the present disclosure.

As illustrated in FIG. 6, the controller 401 generates a message 6-1 indicating that the captured image 4-1 is has been stored together with the augmented reality information when the captured image (AR image) 4-1 has been recorded and the augmented reality information has been tagged to the captured image 4-1, and displays the generated message 6-1 on the display unit 403.

As a result, in the information processing apparatus and method of a mobile terminal according to a first embodiment of the present disclosure, augmented reality information is tagged to a content such as a captured image and/or video, thereby allowing the user to check augmented reality information while easily and conveniently viewing the content.

Hereinafter, an information processing apparatus and method of a mobile terminal according to a second embodiment of the present disclosure will be described with reference to FIGS. 2 and 7 through 10.

FIG. 7 is a flow chart illustrating an information processing method of a mobile terminal according to a second embodiment of the present disclosure.

First, the controller 401 displays a content on the display unit 403 according to the user's request (S21). For example, the controller 401 displays content such as an image or video on the display unit 403 according to the user's request.

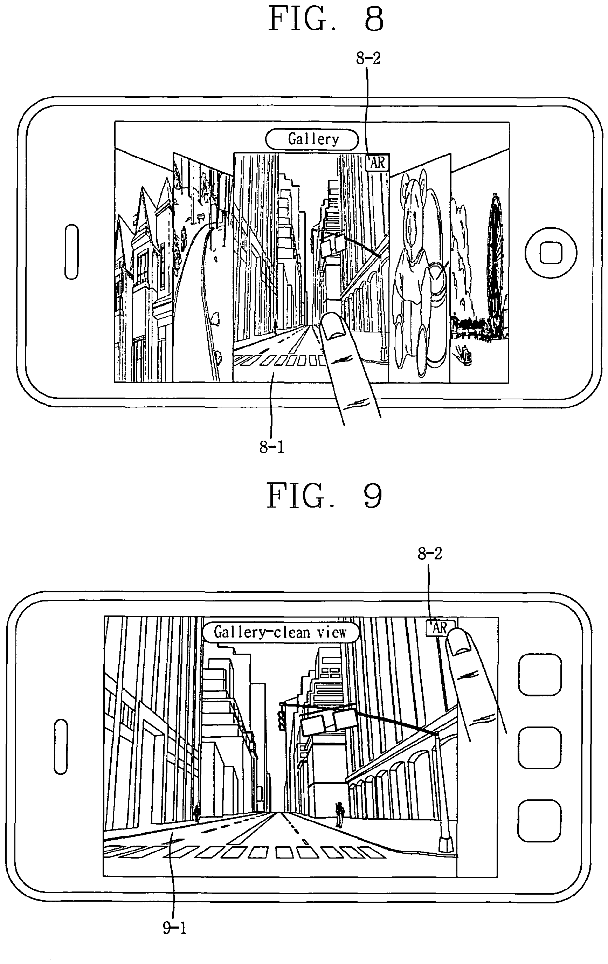

FIG. 8 is an exemplary view illustrating a content displayed on the display unit according to a second embodiment of the present disclosure.

As illustrated in FIG. 8, the controller 401 displays a content 8-1 such as an image or video on the display unit 403 according to the user's request. Furthermore, the controller 401 displays a key (or icon) 8-2 for displaying the AR information and/or AR control menu stored in the storage unit 404 on the content 8-1. The content 8-1, which is an image tagged with AR information, may further include building information, weather information, and the like within an image as well as the geo-tagging information of the captured image, the capturing direction information, and direction information of the mobile terminal.

The controller 401 determines whether a key 8-2 for displaying the AR information and/or AR control menu stored in the storage unit 404 is selected by the user (S22).

When the key 8-2 for displaying the AR information and/or AR control menu stored in the storage unit 404 is selected by the user, the controller 401 displays the content 8-1 on an entire screen of the display unit 403, and displays the AR information and/or AR control menu on the content 8-1 (S23).

FIG. 9 is another exemplary view illustrating a content displayed on the display unit according to a second embodiment of the present disclosure.

As illustrated in FIG. 9, the controller 401 displays a content 8-1 such as an image or video on the display unit 403 according to the user's request. Furthermore, when a key (or icon) 8-2 for displaying the AR information and/or AR control menu stored in the storage unit 404 is selected by the user, the controller 401 displays the content 9-1 in the form of a clean view on an entire screen of the display unit 403.

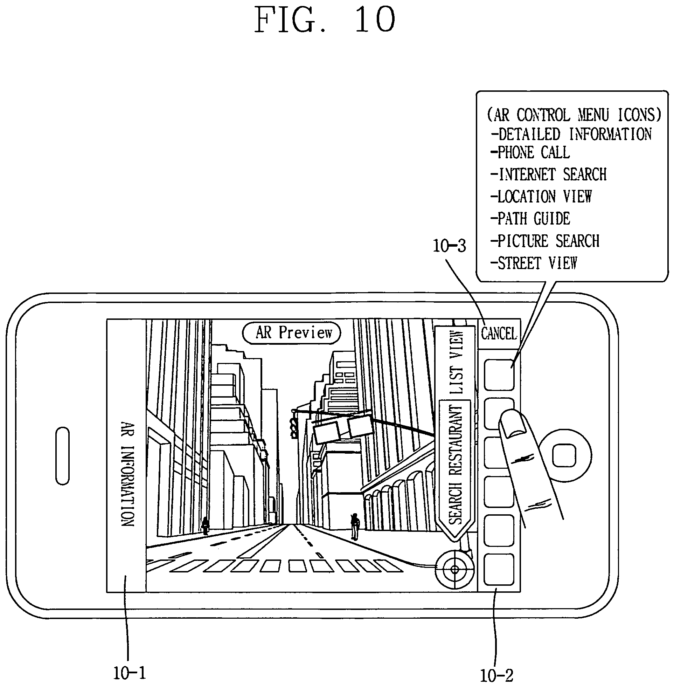

FIG. 10 is an exemplary view illustrating the AR information and/or AR control menu displayed on the content according to a second embodiment of the present disclosure.

As illustrated in FIG. 10, when a key (or icon) 8-2 for displaying the AR information and/or AR control menu stored in the storage unit 404 is selected by the user, the controller 401 displays the AR information 10-1 and/or AR control menu 10-2 on the content 9-1 (S23). At this time, the controller 401 may display a cancel key 10-3 for cancelling the display of the content 9-1 instead of the key 8-2 on the content 9-1.

The AR control menu 10-2 may include a detailed information display icon for displaying detailed information (for example, building address, phone number, home page address, email address, etc.) for a building within the image, a phone call icon for making a phone call based on a phone number included in the detailed information, an Internet search icon for implementing an Internet search based on the detailed information, a location view icon for displaying the capture location of the image, a path guide icon for guiding a path from a current location to a capture location of the image, a picture search icon for searching a picture related to the image, and a street view icon for guiding a street within the image.

When the detailed information display icon is selected by the user, the controller 401 displays detailed information (for example, building address, phone number, home page address, email address, etc.) for a building within the image.

When the phone call icon is selected by the user, the controller 401 makes a phone call based on a phone number included in the detailed information.

When the Internet search icon is selected by the user, the controller 401 implements an Internet search.

When the location view icon is selected by the user, the controller 401 displays the capture location of the image on the display unit 403.

When the path guide icon is selected by the user, the controller 401 guides a path from a current location to a capture location of the image.

When the picture search icon is selected by the user, the controller 401 searches a picture related to the image, and displays the searched picture on the display unit 403.

When the street view icon is selected by the user, the controller 401 guides a street within the image.

As a result, according to the information processing apparatus and method of a mobile terminal according to a second embodiment of the present disclosure, a key or icon for displaying augmented reality information is displayed on content such as a captured image and/or video, thereby allowing the user to easily and conveniently check the augmented reality information.

Hereinafter, an information processing apparatus and method of a mobile terminal according to a third embodiment of the present disclosure will be described with reference to FIGS. 2 and 11 through 14.

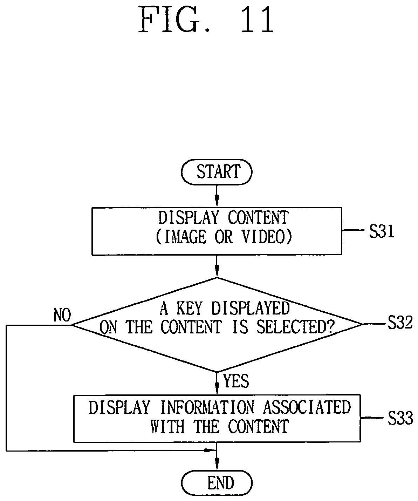

FIG. 11 is a flow chart illustrating an information processing method of a mobile terminal according to a third embodiment of the present disclosure.

First, the controller 401 displays a content on the display unit 403 according to the user's request (S31). For example, the controller 401 displays content such as an image or video on the display unit 403 according to the user's request.

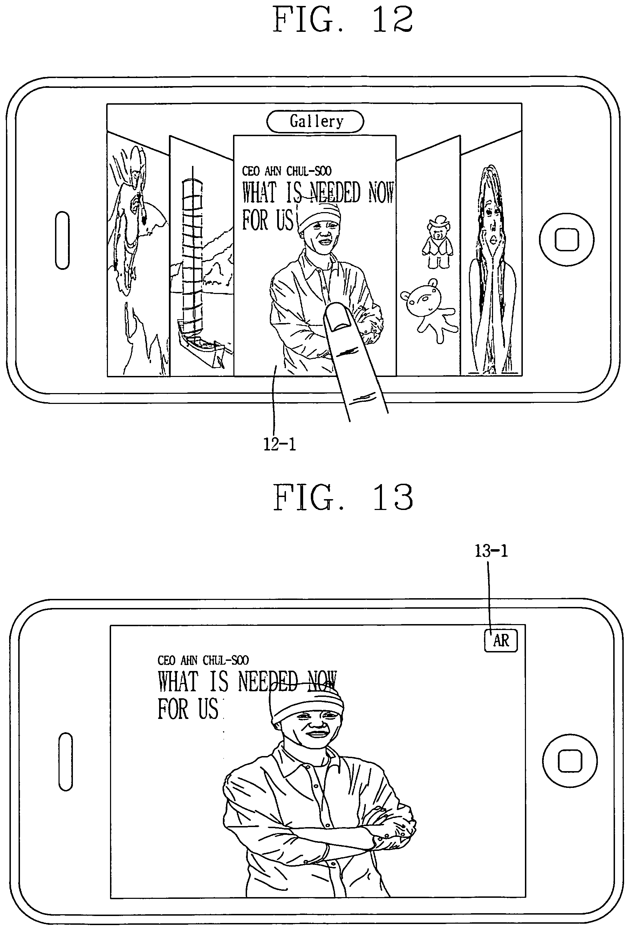

FIG. 12 is an exemplary view illustrating a content displayed on the display unit according to a third embodiment of the present disclosure.

As illustrated in FIG. 12, the controller 401 displays a plurality of contents such as images or videos on the display unit 403 according to the user's request.

When a specific content 12-1 is selected by the user's touch among the plurality of contents, the controller 401 displays the selected specific content 12-1 on an entire screen of the display unit 403. At this time, the controller 401 displays a key or icon for displaying augmented reality information (for example, cinema information, book information, music information, etc.) associated with the specific content 12-1 on the specific content 12-1.

FIG. 13 is another exemplary view illustrating a content displayed on the display unit according to a third embodiment of the present disclosure.

As illustrated in FIG. 13, the controller 401 displays the selected specific content 12-1 on an entire screen of the display unit 403, and displays a key 13-1 or icon for displaying augmented reality information (for example, cinema information, book information, music information, etc.) associated with the displayed specific content 12-1 on the specific content 12-1.

The controller 401 determines whether a key or icon for displaying augmented reality information (for example, cinema information, book information, music information, etc.) associated with the specific content 12-1 is selected by the user (S32).

When whether a key or icon for displaying augmented reality information (for example, cinema information, book information, music information, etc.) associated with the specific content 12-1 is selected by the user, the controller 401 reads the augmented reality information (for example, cinema information, book information, music information, etc.) associated with the specific content 12-1 from the storage unit 404 or receives it from a server through a communication network, and displays the read augmented reality information or the received augmented reality information on the specific content 12-1 (S33).

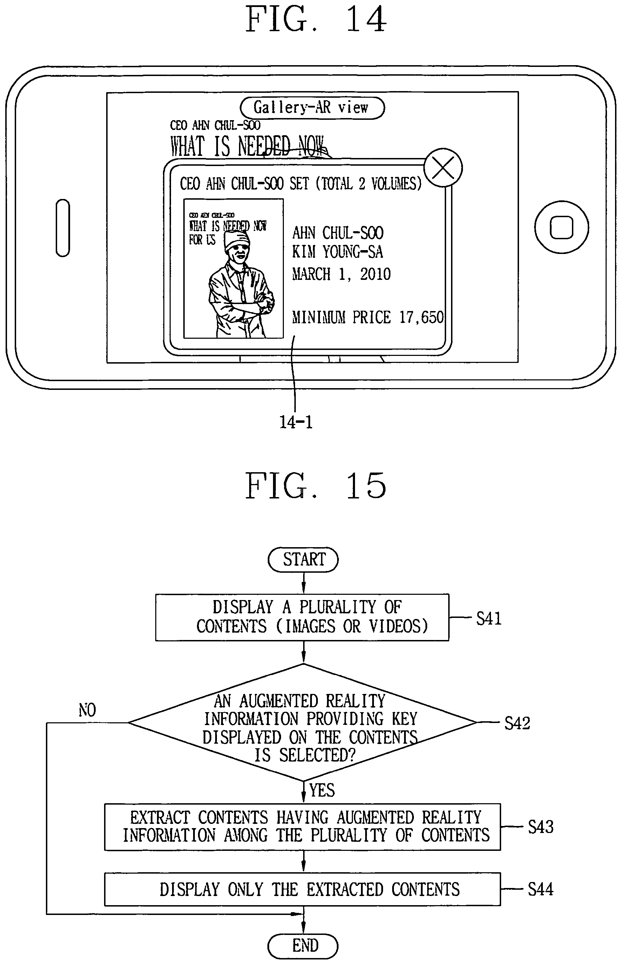

FIG. 14 is an exemplary view illustrating augmented reality information displayed on the display unit according to a third embodiment of the present disclosure.

As illustrated in FIG. 14, when a key or icon for displaying information (for example, cinema information, book information, music information, etc.) associated with the specific content 12-1 is selected by the user, the controller 401 reads augmented reality information (for example, cinema information, book information, music information, etc.) associated with the specific content 12-1 from the storage unit 404 or receives it from a server through a communication network, and displays the read augmented reality information 14-1 or the received augmented reality information 14-1 on the specific content 12-1.

As a result, according to the information processing apparatus and method of a mobile terminal according to a third embodiment of the present disclosure, a key or icon for displaying augmented reality information is displayed on content such as a displayed image and/or video, thereby allowing the user to easily and conveniently check the augmented reality information.

Hereinafter, an information processing apparatus and method of a mobile terminal according to a fourth embodiment of the present disclosure will be described with reference to FIGS. 2 and 15 through 17.

FIG. 15 is a flow chart illustrating an information processing method of a mobile terminal according to a fourth embodiment of the present disclosure.

First, the controller 401 displays a content on the display unit 403 according to the user's request (S41). For example, the controller 401 displays a plurality of contents such as images or videos on the display unit 403 according to the user's request.

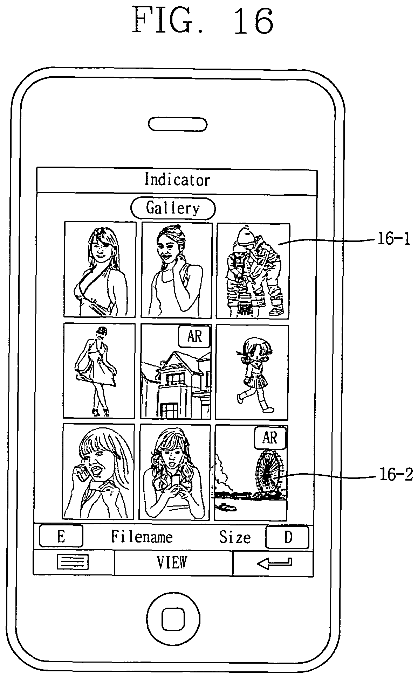

FIG. 16 is an exemplary view illustrating a plurality of contents displayed on the display unit according to a fourth embodiment of the present disclosure.

As illustrated in FIG. 16, the controller 401 displays a plurality of contents 16-1, 16-2 such as images or videos on the display unit 403 according to the user's request. Here, the plurality of contents 16-1, 16-2 may include contents 16-1 such as typical images or videos and contents 16-2 displayed with a key or icon for displaying augmented reality information.

The controller 401 determines whether a key or icon (augmented reality information providing key) for displaying augmented reality information displayed on the contents 16-2 is selected by the user (S42).

When a key or icon (augmented reality information providing key) for displaying augmented reality information displayed on the contents 16-2 is selected by the user, the controller 401 extracts only the contents 16-2 displayed with a key or icon for displaying the augmented reality information from the plurality of contents 16-1, 16-2 (S43).

The controller 401 displays only the extracted contents 16-2 on the display unit 403 (S44).

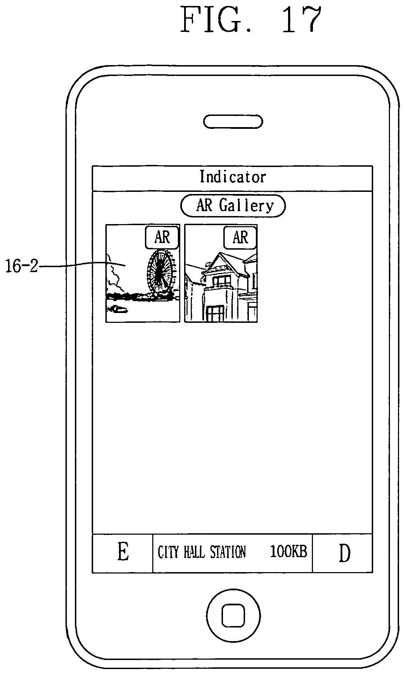

FIG. 17 is an exemplary view illustrating a content displayed on the display unit according to a fourth embodiment of the present disclosure.

As illustrated in FIG. 17, when a key or icon (augmented reality information providing key) for displaying augmented reality information displayed on the contents 16-2 is selected by the user, the controller 401 extracts only the contents 16-2 displayed with a key or icon for displaying the augmented reality information from the plurality of contents 16-1, 16-2, and displays only the extracted contents 16-2 on the display unit 403.

As a result, according to the information processing apparatus and method of a mobile terminal according to a fourth embodiment of the present disclosure, the user can easily and conveniently check only the contents having augmented reality information.

On the other hand, the controller 401 may implement a specific application according to the direction or posture of the mobile terminal. For example, the controller 401 may implement a first application (for example, application indicating map information) when the direction of the mobile terminal faces a first direction (for example, east), and may implement a second application (for example, application indicating point-of-interest information) when the direction of the mobile terminal faces a second direction (for example, west).

As described above, in an information processing apparatus and method of a mobile terminal according to the embodiments of the present disclosure, augmented reality information is tagged to a content such as a captured image and/or video, thereby allowing the user to check augmented reality information while easily and conveniently viewing the content.

In an information processing apparatus and method of a mobile terminal according to the embodiments of the present disclosure, a key or icon for displaying augmented reality information is displayed on content such as a captured image and/or video, thereby allowing the user to easily and conveniently check the augmented reality information.

In an information processing apparatus and method of a mobile terminal according to the embodiments of the present disclosure, a key or icon for displaying augmented reality information is displayed on content such as a displayed image and/or video, thereby allowing the user to easily and conveniently check the augmented reality information.

In an information processing apparatus and method of a mobile terminal according to the embodiments of the present disclosure, the user can easily and conveniently check only the contents having augmented reality information.

It will be apparent to those skilled in this art that various changes and modifications may be made thereto without departing from the gist of the present invention. Accordingly, it should be noted that the embodiments disclosed in the present invention are only illustrative, and the scope of the invention is not limited by those embodiments.

## Claims

1. An information processing apparatus (400) of a mobile terminal (100), the apparatus (400) comprising:
a camera (405);
a display unit (403);
an information module (402);
a storage unit (404); and
a controller (401) operatively connected to the camera (405), the display unit (403), the information module (402), and the storage unit (404), the controller (401) configured to:
capture an image via the camera (405),
display the captured image (4-1) via the display unit (403),
cause the information module (402) to generate tag information including geotagging information of the captured image, capturing direction information of the captured image when capturing the image, and direction information of the mobile terminal (100),
tag the tag information to the captured image (4-1),
store, in the storage unit (404), the captured image (4-1) and the tag information tagged to the captured image (4-1) as content (8-1, 9-1, 10-1), and
display the stored image on the display unit (403),
**characterized in that** the controller (401) is further configured to:
display the stored image (4-1) on the entire screen of the display unit (403) in a clean view;
display a key or icon (8-2) for displaying at least one of the tag information (10-1) and a tag control menu (10-2) on the displayed image,
display, on the display unit (403), the tag information (10-1) and/or the tag control menu (10-2) if the displayed key or icon (8-2) is selected, wherein the tag information (10-1) and/or the tag control menu (10-2) overlaps the stored image,
implement a map information application stored in the storage unit (404), when the direction of the mobile terminal (100) faces a first direction;
implement a point-of-interest indicating application stored in the storage unit (404), when the direction of the mobile terminal (100) faces a second direction.

2. The apparatus (400) of claim 1,
wherein the content further comprises a video captured through the camera (405), and
wherein the tag information is tagged to the video.

3. The apparatus (400) of claim 1, wherein the controller (401) is configured to
generate a message (6-1) indicating that the captured image has been stored together with the tag information, and
display the generated message (6-1) on the display unit (403).

4. The apparatus (400) of claim 2, wherein the controller (401) is configured to
generate a message (5-1) indicating that the video is being recorded together with the tag information, and
display the generated message (5-1) on the display unit (403).

5. The apparatus (400) of claim 2, wherein the controller (401) is configured to
generate a message (6-1) indicating that the captured image or the captured video has been stored together with the tag information when the tag information has been tagged to the captured image or the captured video, and
display the generated message (6-1) on the display unit (403).

6. The apparatus (400) of claim 2, wherein the controller (401) is configured to
display the stored video on the display unit (403), and
display a key or icon (8-2) for displaying at least one of the tag information and an tag control menu on the displayed video.

7. The apparatus (400) of claim 6, wherein the tag information further comprises point-of-interest information corresponding to each object included in the captured image (4-1).

8. The apparatus (400) of claim 6, wherein the tag control menu (10-2) comprises one of:
a detailed information display icon for displaying detailed information for a building within the image or the video;
a phone call icon for making a phone call based on a phone number included in the detailed information;
an Internet search icon for implementing an Internet search based on the detailed information;
a location view icon for displaying the capture location of the image or video;
a path guide icon for guiding a path from a current location to a capture location of the image or video;
a picture search icon for searching a picture related to the image or video; and
a street view icon for guiding a street within the image or video.

9. The apparatus (400) of claim 6, wherein the controller (401) is configured to
read the tag information when the key or icon (8-2) is selected, and
display the read tag information on the content.

10. The apparatus (400) of claim 6, wherein the controller (401) is configured to
receive additional tag information associated with the content from a server through a communication network when the key or icon is selected, and
display the received additional tag information on the content.

11. The apparatus (400) of claim 1, wherein the controller (401) is configured to
extract only content to be displayed with a key or icon for displaying the tag information among a plurality of contents stored in the storage unit (404), and
display the extracted content on the display unit (403).

12. An information processing method of a mobile terminal (100), the method comprising:
displaying, on a display unit (403) of the mobile terminal, an image captured through a camera (405) of the mobile terminal;
generating (S12), by the mobile terminal (100), tag information including geo-tagging information of the captured image, capturing direction information of the captured image, and direction information of the mobile terminal (100), when capturing (S11) the image;
tagging (S13), by the mobile terminal (100), the tag information to the captured image;
storing (S14), in a storage of the mobile terminal, the captured image and the tag information tagged to the captured image as content in a storage unit (403), and
displaying the stored image on the display unit (403);
**characterized in that** the method further comprises
displaying the stored image on the entire screen of the display unit (403) in a clean view;
displaying, on the display unit (403), a key or icon (8-2) for displaying at least one of the tag information and a tag control menu on the displayed image,
displaying, on the display unit (403), the tag information or the tag control menu if the displayed key or icon (8-2) is selected, wherein the tag information (10-1) and/or the tag control menu (10-2) overlap the stored image;
implementing, by the mobile terminal (100), a map information application stored in the storage unit when the direction of the mobile terminal (100) faces a first direction;
implementing a point-of-interest indicating application stored in the storage unit (404) when the direction of the mobile terminal (100) faces a second direction.

13. The method of claim 12,
wherein the content further comprises a video captured through the camera, and
wherein the tag information is tagged to the video.

14. The method of claim 12, further comprising:
generating, by the mobile terminal (100), a message indicating that the captured image has been stored together with the tag information; and
displaying the generated message on the display unit (405).

15. The method of claim 13, further comprising:
generating, by the mobile terminal (100), a message indicating that the video is being recorded together with the tag information; and
displaying the generated message on the display unit (405).

16. The method of claim 13, further comprising:
generating, by the mobile terminal (100), a message indicating that the captured image or the captured video has been stored together with the tag information when the tag information has been tagged to the captured image or the captured video; and
displaying the generated message on the display unit (403).

17. The method of claim 13, further comprising:
displaying the stored video on the display unit; and
displaying, on the display unit, a key or icon for displaying at least one of the tag information and an tag control menu on the displayed video.

18. The method of claim 17, wherein the tag information further comprises one of:
building information within the image or video;
weather information corresponding to a capture location of the image or video;
cinema information associated with the image or video;
book information associated with the image or video; and
music information associated with the image or video.

19. The method of claim 17, wherein the tag control menu comprises one of:
a detailed information display icon for displaying detailed information for a building within the image or video;
a phone call icon for making a phone call based on a phone number included in the detailed information;
an Internet search icon for implementing an Internet search based on the detailed information;
a location view icon for displaying the capture location of the image or video;
a path guide icon for guiding a path from a current location to a capture location of the image or video;
a picture search icon for searching a picture related to the image or video; and
a street view icon for guiding a street within the image or video.

20. The method of claim 17, further comprising:
reading, by the mobile terminal, the tag information from the storage unit when the key or icon is selected; and
displaying, on the display unit, the read tag information on the content.

21. The method of claim 17, further comprising:
receiving, by the mobile terminal (100), additional tag information associated with the content from a server through a communication network when the key or icon is selected; and
displaying, on the display unit (403), the received additional tag information on the content.

22. The method of claim 12, further comprising:
extracting, by the mobile terminal (100), only content to be displayed with a key or icon for displaying the tag information among a plurality of contents stored in the storage unit; and
displaying the extracted content on the display unit (403).

## Patentansprüche

1. Datenverarbeitungsvorrichtung (400) eines mobilen Endgeräts (100), wobei die Vorrichtung (400) umfasst:
eine Kamera (405);
eine Anzeigeeinheit (403);
ein Informationsmodul (402);
eine Speichereinheit (404); und
einen Controller (401), der mit der Kamera (405), mit der Anzeigeeinheit (403), mit dem Informationsmodul (402) und mit der Speichereinheit (404) funktional verbunden ist, wobei der Controller (401) konfiguriert ist zum:
Aufnehmen eines Bilds über die Kamera (405),
Anzeigen des aufgenommenen Bilds (4-1) über die Anzeigeeinheit (403), Veranlassen, dass das Informationsmodul (402) Tag-Informationen erzeugt, die Geotagging-Informationen des aufgenommenen Bilds, Aufnahmerichtungsinformationen des aufgenommenen Bilds, wenn das Bild aufgenommen wird, und Richtungsinformationen des mobilen Endgeräts (100) enthalten,
Taggen der Tag-Informationen an das aufgenommene Bild (4-1),
Speichern des aufgenommenen Bilds (4-1) und der Tag-Informationen, die an das aufgenommene Bild (4-1) getaggt worden sind, als Inhalt (8-1, 9-1, 10-1) in der Speichereinheit (404), und
Anzeigen des gespeicherten Bilds auf der Anzeigeeinheit (403),
**dadurch gekennzeichnet, dass** der Controller (401) ferner konfiguriert ist zum:
Anzeigen des gespeicherten Bilds (4-1) auf dem gesamten Bildschirm der Anzeigeeinheit (403) in einer deutlichen Ansicht;
Anzeigen einer Taste oder eines Icons (8-2) zum Anzeigen der Tag-Informationen (10-1) und/oder eines Tag-Steuermenüs (10-2) auf dem angezeigten Bild,
Anzeigen der Tag-Informationen (10-1) und/oder des Tag-Steuermenüs (10-2) auf der Anzeigeeinheit (403), falls die angezeigte Taste oder das angezeigte Icon (8-2) ausgewählt wird, wobei die Tag-Informationen (10-1) und/oder das Tag-Steuermenü (10-2) das gespeicherte Bild überlappen,
Implementieren einer Karteninformationsanwendung, die in der Speichereinheit (404) gespeichert ist, wenn die Richtung des mobilen Endgeräts (100) in eine erste Richtung weist;
Implementieren einer Anwendung zur Angabe interessierender Orte, die in der Speichereinheit (404) gespeichert ist, wenn die Richtung des mobilen Endgeräts (100) in eine zweite Richtung weist.

2. Vorrichtung (400) nach Anspruch 1,
wobei der Inhalt ferner ein über die Kamera (405) aufgenommenes Video umfasst, und
wobei die Tag-Informationen an das Video getaggt werden.

3. Vorrichtung (400) nach Anspruch 1, wobei der Controller (401) konfiguriert ist zum:
Erzeugen einer Nachricht (6-1), die angibt, dass das aufgenommene Bild gemeinsam mit den Tag-Informationen gespeichert worden ist, und
Anzeigen der erzeugten Nachricht (6-1) auf der Anzeigeeinheit (403).

4. Vorrichtung (400) nach Anspruch 2, wobei der Controller (401) konfiguriert ist zum:
Erzeugen einer Nachricht (5-1), die angibt, dass das Video gemeinsam mit den Tag-Informationen aufgezeichnet wird, und
Anzeigen der erzeugten Nachricht (5-1) auf der Anzeigeeinheit (403).

5. Vorrichtung (400) nach Anspruch 2, wobei der Controller (401) konfiguriert ist zum:
Erzeugen einer Nachricht (6-1), die angibt, dass das aufgenommene Bild oder das aufgenommene Video gemeinsam mit den Tag-Informationen gespeichert worden ist, wenn die Tag-Informationen an das aufgenommene Bild oder an das aufgenommene Video getaggt worden sind, und
Anzeigen der erzeugten Nachricht (6-1) auf der Anzeigeeinheit (403).

6. Vorrichtung (400) nach Anspruch 2, wobei der Controller (401) konfiguriert ist zum:
Anzeigen des gespeicherten Videos auf der Anzeigeeinheit (403), und
Anzeigen einer Taste oder eines Icons (8-2) zum Anzeigen der Tag-Informationen und/oder eines Tag-Steuermenüs auf dem angezeigten Video.

7. Vorrichtung (400) nach Anspruch 6, wobei die Tag-Informationen ferner Informationen über interessierende Punkte umfassen, die jedem in dem aufgenommenen Bild (4-1) enthaltenen Objekt entsprechen.

8. Vorrichtung (400) nach Anspruch 6, wobei das Tag-Steuermenü (10-2) eines der Folgenden umfasst:
ein Icon für die Anzeige ausführlicher Informationen, um ausführliche Informationen für ein Gebäude innerhalb des Bilds oder des Videos anzuzeigen;
ein Telefonanruf-Icon, um auf der Grundlage einer in den ausführlichen Informationen enthaltenen Telefonnummer einen Telefonanruf vorzunehmen;
ein Internetsuche-Icon, um auf der Grundlage der ausführlichen Informationen eine Internetsuche zu implementieren;
ein Ortsansichts-Icon, um den Aufnahmeort des Bilds oder Videos anzuzeigen;
ein Wegführungs-Icon, um auf einem Weg von einem aktuellen Ort zu einem Aufnahmeort des Bilds oder Videos zu führen;
ein Bildsuche-Icon, um ein mit dem Bild oder Video verwandtes Bild zu suchen; und
ein Streetview-Icon, um auf einer Straße innerhalb des Bilds oder Videos zu führen.

9. Vorrichtung (400) nach Anspruch 6, wobei der Controller (401) konfiguriert ist zum:
Lesen der Tag-Informationen, wenn die Taste oder das Icon (8-2) ausgewählt wird, und
Anzeigen der gelesenen Tag-Informationen über den Inhalt.

10. Vorrichtung (400) nach Anspruch 6, wobei der Controller (401) konfiguriert ist zum:
Empfangen zusätzlicher Tag-Informationen, die dem Inhalt zugeordnet sind, von einem Server über ein Kommunikationsnetz, wenn die Taste oder das Icon ausgewählt wird, und
Anzeigen der empfangenen zusätzlichen Tag-Informationen über den Inhalt.

11. Vorrichtung (400) nach Anspruch 1, wobei der Controller (401) konfiguriert ist zum:
Extrahieren nur von Inhalt, der mit einer Taste oder mit einem Icon angezeigt werden soll, um die Tag-Informationen unter mehreren in der Speichereinheit (404) gespeicherten Inhalten anzuzeigen, und
Anzeigen des extrahierten Inhalts auf der Anzeigeeinheit (403).

12. Datenverarbeitungsverfahren eines mobilen Endgeräts (100), wobei das Verfahren umfasst:
Anzeigen eines über eine Kamera (405) des mobilen Endgeräts aufgenommenen Bilds auf einer Anzeigeeinheit (403) des mobilen Endgeräts;
Erzeugen (S12) von Tag-Informationen, die Geotagging-Informationen des aufgenommenen Bilds, Aufnahmerichtungsinformationen des aufgenommenen Bilds und Richtungsinformationen des mobilen Endgeräts (100) enthalten, durch das mobile Endgerät (100), wenn das Bild aufgenommen wird (S11),
Taggen (S13) der Tag-Informationen an das aufgenommene Bild durch das mobile Endgerät (100);
Speichern (S14) des aufgenommenen Bilds und der Tag-Informationen, die an das aufgenommene Bild getaggt worden sind, als Inhalt in einer Speichereinheit (403) in einem Speicher des mobilen Endgeräts, und
Anzeigen des gespeicherten Bilds auf der Anzeigeeinheit (403);
**dadurch gekennzeichnet, dass** das Verfahren ferner umfasst:
Anzeigen des gespeicherten Bilds auf dem gesamten Bildschirm der Anzeigeeinheit (403) in einer deutlichen Ansicht;
Anzeigen einer Taste oder eines Icons (8-2) zum Anzeigen der Tag-Informationen und/oder eines Tag-Steuermenüs auf dem angezeigten Bild auf der Anzeigeeinheit (403),
Anzeigen der Tag-Informationen und/oder des Tag-Steuermenüs auf der Anzeigeeinheit (403), falls die angezeigte Taste oder das angezeigte Icon (8-2) ausgewählt wird, wobei die Tag-Informationen (10-1) und/oder das Tag-Steuermenü (10-2) das gespeicherte Bild überlappen,
Implementieren einer Karteninformationsanwendung, die in der Speichereinheit gespeichert ist, wenn die Richtung des mobilen Endgeräts (100) in eine erste Richtung weist, durch das mobile Endgerät (100);
Implementieren einer Anwendung zur Angabe interessierender Orte, die in der Speichereinheit (404) gespeichert ist, wenn die Richtung des mobilen Endgeräts (100) in eine zweite Richtung weist.

13. Verfahren nach Anspruch 12,
wobei der Inhalt ferner ein über die Kamera aufgenommenes Video umfasst, und
wobei die Tag-Informationen an das Video getaggt werden.

14. Verfahren nach Anspruch 12, das ferner umfasst:
Erzeugen einer Nachricht, die angibt, dass das aufgenommene Bild gemeinsam mit den Tag-Informationen gespeichert worden ist, durch das mobile Endgerät (100); und
Anzeigen der erzeugten Nachricht auf der Anzeigeeinheit (405).

15. Verfahren nach Anspruch 13, das ferner umfasst:
Erzeugen einer Nachricht, die angibt, dass das Video gemeinsam mit den Tag-Informationen aufgezeichnet wird, durch das mobile Endgerät (100); und
Anzeigen der erzeugten Nachricht auf der Anzeigeeinheit (405).

16. Verfahren nach Anspruch 13, das ferner umfasst:
Erzeugen einer Nachricht, die angibt, dass das aufgenommene Bild oder das aufgenommene Video gemeinsam mit den Tag-Informationen gespeichert worden ist, wenn die Tag-Informationen an das aufgenommene Bild oder an das aufgenommene Video getaggt worden sind, durch das mobile Endgerät (100); und
Anzeigen der erzeugten Nachricht auf der Anzeigeeinheit (403).

17. Verfahren nach Anspruch 13, das ferner umfasst:
Anzeigen des gespeicherten Videos auf der Anzeigeeinheit; und
Anzeigen einer Taste oder eines Icons zum Anzeigen der Tag-Informationen und/oder eines Tag-Steuermenüs auf dem angezeigten Video auf der Anzeigeeinheit.

18. Verfahren nach Anspruch 17, wobei die Tag-Informationen ferner eines der Folgenden umfassen:
Gebäudeinformationen innerhalb des Bilds oder Videos;
Wetterinformationen, die einem Aufnahmeort des Bilds oder Videos entsprechen;
Kinoinformationen, die dem Bild oder Video zugeordnet sind;
Buchinformationen, die dem Bild oder Video zugeordnet sind; und
Musikinformationen, die dem Bild oder Video zugeordnet sind.

19. Verfahren nach Anspruch 17, wobei das Tag-Steuermenü eines der Folgenden umfasst:
ein Icon für die Anzeige ausführlicher Informationen, um ausführliche Informationen für ein Gebäude innerhalb des Bilds oder des Videos anzuzeigen;
ein Telefonanruf-Icon, um auf der Grundlage einer in den ausführlichen Informationen enthaltenen Telefonnummer einen Telefonanruf vorzunehmen;
ein Internetsuche-Icon, um auf der Grundlage der ausführlichen Informationen eine Internetsuche zu implementieren;
ein Ortsansichts-Icon, um den Aufnahmeort des Bilds oder Videos anzuzeigen;
ein Wegführungs-Icon, um auf einem Weg von einem aktuellen Ort zu einem Aufnahmeort des Bilds oder Videos zu führen;
ein Bildsuche-Icon, um ein mit dem Bild oder Video verwandtes Bild zu suchen; und
ein Streetview-Icon, um auf einer Straße innerhalb des Bilds oder Videos zu führen.

20. Verfahren nach Anspruch 17, das ferner umfasst:
Lesen der Tag-Informationen aus der Speichereinheit, wenn die Taste oder das Icon ausgewählt wird, durch das mobile Endgerät; und
Anzeigen der gelesenen Tag-Informationen über den Inhalt auf der Anzeigeeinheit.

21. Verfahren nach Anspruch 17, das ferner umfasst:
Empfangen zusätzlicher Tag-Informationen, die dem Inhalt zugeordnet sind, von einem Server über ein Kommunikationsnetz, wenn die Taste oder das Icon ausgewählt wird, durch das mobile Endgerät (100); und
Anzeigen der empfangenen zusätzlichen Tag-Informationen über den Inhalt auf der Anzeigeeinheit (403).

22. Verfahren nach Anspruch 12, das ferner umfasst:
Extrahieren nur von Inhalt, der mit einer Taste oder mit einem Icon angezeigt werden soll, um die Tag-Informationen unter mehreren in der Speichereinheit gespeicherten Inhalten anzuzeigen, durch das mobile Endgerät (100); und
Anzeigen des extrahierten Inhalts auf der Anzeigeeinheit (403).

## Revendications

1. Appareil de traitement d'informations (400) d'un terminal mobile (100), l'appareil (400) comprenant :
une caméra (405) ;
une unité d'affichage (403) ;
un module d'informations (402) ;
une unité de mémorisation (404) ; et
un organe de commande (401) relié, de manière opérationnelle, à la caméra (405), à l'unité d'affichage (403), au module d'informations (402), et à l'unité de mémorisation (404), l'organe de commande (401) étant configuré pour :
acquérir une image par l'intermédiaire de la caméra (405),
afficher l'image acquise (4-1) par l'intermédiaire de l'unité d'affichage (403),
amener le module d'informations (402) à générer des informations d'étiquette comprenant des informations de géolocalisation de l'image acquise, en acquérant des informations de sens de l'image acquise lors de l'acquisition de l'image, et des informations de sens du terminal mobile (100),
étiqueter les informations d'étiquette sur l'image acquise (4-1),
mémoriser, dans l'unité de mémorisation (404), l'image acquise (4-1) et les informations d'étiquette étiquetées sur l'image acquise (4-1) en tant que contenu (8-1, 9-1, 10-1), et
afficher l'image mémorisée sur l'unité d'affichage (403),
**caractérisé en ce que** l'organe de commande (401) est en outre configuré pour :
afficher l'image mémorisée (4-1) sur l'écran complet de l'unité d'affichage (403) dans une vue propre ;
afficher une touche ou une icône (8-2) pour afficher au moins l'un d'informations d'étiquette (10-1) et d'un menu de commande d'étiquette (10-2) sur l'image affichée,
afficher, sur l'unité d'affichage (403), les informations d'étiquette (10-1) et/ou le menu de commande d'étiquette (10-2) si la touche ou l'icône affichée (8-2) est sélectionnée, dans lequel les informations d'étiquette (10-1) et/ou le menu de commande d'étiquette (10-2) chevauchent l'image mémorisée,
mettre en oeuvre une application d'informations de carte mémorisée dans l'unité de mémorisation (404), lorsque le sens du terminal mobile (100) fait face à un premier sens ;
mettre en oeuvre une application d'indication de points d'intérêt mémorisée dans l'unité de mémorisation (404), lorsque le sens du terminal mobile fait face à un deuxième sens.

2. Appareil (400) selon la revendication 1,
dans lequel le contenu comprend en outre une vidéo acquise par l'intermédiaire de la caméra (405), et
dans lequel les informations d'étiquette sont étiquetées sur la vidéo.

3. Appareil (400) selon la revendication 1, dans lequel l'organe de commande (401) est configuré pour :
générer un message (6-1) indiquant que l'image acquise a été mémorisée avec les informations d'étiquette, et
afficher le message généré (6-1) sur l'unité d'affichage (403).

4. Appareil (400) selon la revendication 2, dans lequel l'organe de commande (401) est configuré pour :
générer un message (5-1) indiquant que la vidéo est enregistrée avec les informations d'étiquette, et
afficher le message généré (5-1) sur l'unité d'affichage (403).

5. Appareil (400) selon la revendication 2, dans lequel l'organe de commande (401) est configuré pour :
générer un message (6-1) indiquant que l'image acquise ou la vidéo acquise a été mémorisée avec les informations d'étiquette lorsque les informations d'étiquette ont été étiquetées sur l'image acquise ou sur la vidéo acquise, et
afficher le message généré (6-1) sur l'unité d'affichage (403).

6. Appareil (400) selon la revendication 2, dans lequel l'organe de commande (401) est configuré pour :
afficher la vidéo mémorisée sur l'unité d'affichage (403), et
afficher une touche ou une icône (8-2) pour afficher au moins l'un des informations d'étiquette et d'un menu de commande d'étiquette sur la vidéo affichée.

7. Appareil (400) selon la revendication 6, dans lequel les informations d'étiquette comprennent en outre des informations de points d'intérêt correspondant à chaque objet inclus dans l'image acquise (4-1).

8. Appareil (400) selon la revendication 6, dans lequel le menu de commande d'étiquette (10-2) comprend l'une de :
une icône d'affichage d'informations détaillées pour afficher des informations détaillées pour un bâtiment à l'intérieur de l'image ou de la vidéo ;
une icône d'appel téléphonique pour passer un appel téléphonique sur la base d'un numéro de téléphone inclus dans les informations détaillées ;
une icône de recherche Internet pour mettre en oeuvre une recherche Internet sur la base des informations détaillées ;
une icône de vue d'emplacement pour afficher l'emplacement d'acquisition de l'image ou de la vidéo ;
une icône de guide d'itinéraire pour guider un itinéraire depuis un emplacement actuel jusqu'à un emplacement d'acquisition de l'image ou de la vidéo ;
une icône de recherche de photographie pour rechercher une photographie relative à l'image ou à la vidéo ; et
une icône de vue de rue pour guider une rue à l'intérieur de l'image ou de la vidéo.

9. Appareil (400) selon la revendication 6, dans lequel l'organe de commande (401) est configuré pour :
lire les informations d'étiquette lorsque la touche ou l'icône (8-2) est sélectionnée, et
afficher les informations d'étiquette lues sur le contenu.

10. Appareil (400) selon la revendication 6, dans lequel l'organe de commande (401) est configuré pour :
recevoir des informations d'étiquette supplémentaires associées au contenu en provenance d'un serveur par l'intermédiaire d'un réseau de communication lorsque la touche ou l'icône est sélectionnée, et
afficher les informations d'étiquette supplémentaires reçues sur le contenu.

11. Appareil (400) selon la revendication 1, dans lequel l'organe de commande (401) est configuré pour :
extraire uniquement un contenu à afficher avec une touche ou une icône pour afficher les informations d'étiquette parmi une pluralité de contenus mémorisés dans l'unité de mémorisation (404), et
afficher le contenu extrait sur l'unité d'affichage (403).

12. Procédé de traitement d'informations d'un terminal mobile (100), le procédé comprenant :
l'affichage, sur une unité d'affichage (403) du terminal mobile, d'une image acquise par l'intermédiaire d'une caméra (405) du terminal mobile ;
la génération (S12), par le terminal mobile (100), d'informations d'étiquette comprenant des informations de géolocalisation de l'image acquise, en acquérant des informations de sens de l'image acquise et des informations de sens du terminal mobile (100) lors de l'acquisition (S11) de l'image ;
l'étiquetage (S13), par le terminal mobile (100), des informations d'étiquette sur l'image acquise ;
la mémorisation (S14), dans une mémoire du terminal mobile, de l'image acquise et des informations d'étiquette étiquetées sur l'image acquise en tant que contenu dans une unité de mémorisation (403), et
l'affichage de l'image mémorisée sur l'unité d'affichage (403) ;
**caractérisé en ce que** le procédé comprend en outre :
l'affichage de l'image mémorisée sur l'écran complet de l'unité d'affichage (403) dans une vue propre ;
l'affichage, sur l'unité d'affichage (403), d'une touche ou d'une icône (8-2) pour afficher au moins l'un d'informations d'étiquette et d'un menu de commande d'étiquette sur l'image affichée,
l'affichage, sur l'unité d'affichage (403), des informations d'étiquette ou du menu de commande d'étiquette si la touche ou l'icône affichée (8-2) est sélectionnée, dans lequel les informations d'étiquette (10-1) et/ou le menu de commande d'étiquette (10-2) chevauchent l'image mémorisée,
la mise en oeuvre, par le terminal mobile (100), d'une application d'informations de carte mémorisée dans l'unité de mémorisation lorsque le sens du terminal mobile (100) fait face à un premier sens ;
la mise en oeuvre d'une application d'indication de points d'intérêt mémorisée dans l'unité de mémorisation (404) lorsque le sens du terminal mobile (100) fait face à un deuxième sens.

13. Procédé selon la revendication 12,
dans lequel le contenu comprend en outre une vidéo acquise par l'intermédiaire de la caméra, et
dans lequel les informations d'étiquette sont étiquetées sur la vidéo.

14. Procédé selon la revendication 12, comprenant en outre :
la génération, par le terminal mobile (100), d'un message indiquant que l'image acquise a été mémorisée avec les informations d'étiquette ; et
l'affichage du message généré sur l'unité d'affichage (405) .

15. Procédé selon la revendication 13, comprenant en outre :
la génération, par le terminal mobile (100), d'un message indiquant que la vidéo est enregistrée avec les informations d'étiquette ; et
l'affichage du message généré sur l'unité d'affichage (405).

16. Procédé selon la revendication 13, comprenant en outre :
la génération, par le terminal mobile (100), d'un message indiquant que l'image acquise ou la vidéo acquise a été mémorisée avec les informations d'étiquette lorsque les informations d'étiquette ont été étiquetées sur l'image acquise ou sur la vidéo acquise ; et
l'affichage du message généré sur l'unité d'affichage (403).

17. Procédé selon la revendication 13, comprenant en outre :
l'affichage de la vidéo mémorisée sur l'unité d'affichage ; et
l'affichage, sur l'unité d'affichage, d'une touche ou d'une icône pour afficher au moins l'un des informations d'étiquette et d'un menu de commande d'étiquette sur la vidéo affichée.

18. Procédé selon la revendication 17, dans lequel les informations d'étiquette comprennent en outre l'une de :
des informations de bâtiment à l'intérieur de l'image ou de la vidéo ;
des informations météorologiques correspondant à un emplacement d'acquisition de l'image ou de la vidéo ;
des informations de cinéma associées à l'image ou à la vidéo ;
des informations de livre associées à l'image ou à la vidéo ; et
des informations de musique associées à l'image ou à la vidéo.

19. Procédé selon la revendication 17, dans lequel le menu de commande d'étiquette comprend l'une de :
une icône d'affichage d'informations détaillées pour afficher des informations détaillées pour un bâtiment à l'intérieur de l'image ou de la vidéo ;
une icône d'appel téléphonique pour passer un appel téléphonique sur la base d'un numéro de téléphone inclus dans les informations détaillées ;
une icône de recherche Internet pour mettre en oeuvre une recherche Internet sur la base des informations détaillées ;
une icône de vue d'emplacement pour afficher l'emplacement d'acquisition de l'image ou de la vidéo ;
une icône de guide d'itinéraire pour guider un itinéraire depuis un emplacement actuel jusqu'à un emplacement d'acquisition de l'image ou de la vidéo ;
une icône de recherche de photographie pour rechercher une photographie relative à l'image ou à la vidéo ; et une icône de vue de rue pour guider une rue à l'intérieur de l'image ou de la vidéo.

20. Procédé selon la revendication 17 comprenant en outre :
la lecture, par le terminal mobile, des informations d'étiquette de l'unité de mémorisation lorsque la touche ou l'icône est sélectionnée ; et
l'affichage, sur l'unité d'affichage, des informations d'étiquette lues sur le contenu.

21. Procédé selon la revendication 17, comprenant en outre :
la réception, par le terminal mobile (100), d'informations d'étiquette supplémentaires associées au contenu en provenance d'un serveur par l'intermédiaire d'un réseau de communication lorsque la touche ou l'icône est sélectionnée ; et
l'affichage, sur l'unité d'affichage (403), des informations d'étiquette supplémentaires reçues sur le contenu.

22. Procédé selon la revendication 12, comprenant en outre :
l'extraction, par le terminal mobile (100), uniquement d'un contenu à afficher avec une touche ou une icône pour afficher les informations d'étiquette parmi une pluralité de contenus mémorisés dans l'unité de mémorisation ; et
l'affichage du contenu extrait sur l'unité d'affichage (403) .
